# EUROPEAN PATENT APPLICATION

(11) **EP 4 844 900 A1**
(43) Date of publication of application: **25.11.2026**
(21) Application number: 26177860.9
(22) Date of filing: 11.05.2026
(51) Int. Cl.: H01M 50/105, H01M 10/04

(54) **BATTERY CELL**

(30) Priority: 19.05.2025 JP 2025083377
(71) Applicant: Toyota Jidosha Kabushiki Kaisha, Toyota-shi, Aichi-ken 471-8571 (JP)
(72) Inventor: IZUMI, Jun, Toyota-shi, 471-8571 (JP); SUGIHARA, Atsushi, Toyota-shi, 471-8571 (JP); NAKASHIMA, Satoshi, Toyota-shi, 471-8571 (JP); ONO, Masato, Toyota-shi, 471-8571 (JP); HAGA, Masayoshi, Toyota-shi, 471-8571 (JP); ISHIZUKA, Masahiro, Toyota-shi, 471-8571 (JP); MIYAHARA, Kenta, Toyota-shi, 471-8571 (JP)
(74) Representative: D Young & Co LLP

(57) **Abstract**

A battery cell (10) includes a power storage element (20) and an outer case (30). The outer case (30) has first and second film portions (31, 32). The power storage element (20) is disposed between the first and second film portions (31, 32). The outer case (30) has first and second storage portions (31a, 32a) respectively formed by portions of the first and second film portions (31, 32), covering the power storage element (20), and an outer peripheral stacked portion (36) where first and second outer peripheral portions that are respectively portions of the first and second film portions (31, 32) around the power storage element (20) are stacked and welded together. The outer peripheral stacked portion (36) has a folded portion (40) folded at a fold line (49) toward the power storage element (20). A fixing portion (32x) that is a part of the folded portion (40) is welded to a fixed portion (32y) provided in a portion of the outer case (30), located on a side opposite to the folded portion (40) across the fold line (49).

## Description

### BACKGROUND OF THE INVENTION

### 1. Field of the Invention

A technology disclosed in the specification relates to a battery cell.

### 2. Description of Related Art

The battery cell described in Japanese Unexamined Patent Application Publication No. 2020-068197 (JP 2020-068197 A) includes a power storage element and an outer case that houses the power storage element. The outer case has a first film portion that covers one surface of the power storage element and a second film portion that covers the other surface of the power storage element. An outer peripheral stacked portion formed by stacking and welding together an outer peripheral portion of the first film portion and an outer peripheral portion of the second film portion is provided around the power storage element. The outer case is sealed at the outer peripheral stacked portion.

### SUMMARY OF THE INVENTION

In the structure of the battery cell described in JP 2020-068197 A, the width of the outer peripheral stacked portion of the outer case is wide, which makes it difficult to reduce the size of the battery cell. The specification suggests a technology for reducing the size of a battery cell.

A battery cell disclosed in the specification includes a power storage element and an outer case that houses the power storage element. The outer case has a first film portion and a second film portion. The power storage element is disposed between the first film portion and the second film portion. The first film portion has a first storage portion covering a surface of the power storage element and a first outer peripheral portion extending from the first storage portion and located around the power storage element. The second film portion has a second storage portion covering a surface of the power storage element and a second outer peripheral portion extending from the second storage portion and located around the power storage element. The first outer peripheral portion and the second outer peripheral portion are stacked and welded together to constitute an outer peripheral stacked portion. The outer peripheral stacked portion has a folded portion folded at a fold line toward the power storage element and having a fixing portion. The fixing portion is a part of the folded portion and is welded to a fixed portion provided in a portion of the outer case, located on a side opposite to the folded portion across the fold line.

In the battery cell, the folded portion folded toward the power storage element is provided in the outer peripheral stacked portion of the outer case. The fixing portion that is a part of the folded portion is welded to the fixed portion, with the result that the folded portion is fixed in a folded state. For this reason, with this structure, the battery cell can be reduced in size.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a battery cell;
FIG. 2 is a plan view of the battery cell when viewed along a z direction;
FIG. 3 is a cross-sectional view of the battery cell before an outer case is sealed;
FIG. 4 is a cross-sectional view of an outer peripheral stacked portion before a folded portion is formed;
FIG. 5 is a cross-sectional view of the outer peripheral stacked portion in a process of forming the folded portion;
FIG. 6 is a cross-sectional view of the outer peripheral stacked portion (a cross-sectional view taken along the line VI in FIG. 2) after the folded portion is formed;
FIG. 7 is a perspective view of the battery cell before the folded portion is fixed;
FIG. 8 is an enlarged perspective view of region R2 before the folded portion is fixed; and
FIG. 9 is a cross-sectional view of a fixing portion and a fixed portion (a cross-sectional view taken along the line IX in FIG. 2).

### DETAILED DESCRIPTION OF EMBODIMENTS

Additional configurations of a battery cell disclosed in the specification are listed below.

A storage body constituted by the first storage portion and the second storage portion may have a first side surface and a second side surface adjacent to the first side surface via a corner. The outer peripheral stacked portion may be provided over the first side surface and the second side surface. The folded portion may be provided along the first side surface. The fixing portion may be provided in a portion of the folded portion on an outer side of the second side surface.

The fixed portion may be provided in a portion of the outer peripheral stacked portion, protruding from the second side surface.

With this configuration, since the fixed portion is provided in the outer peripheral stacked portion, it is possible to suppress heat transfer to the power storage element when the fixing portion is welded to the fixed portion.

The first film portion may have a first metal film portion and a first inner resin film covering an inner surface of the first metal film portion. The second film portion may have a second metal film portion and a second inner resin film covering an inner surface of the second metal film portion. In the outer peripheral stacked portion, the first inner resin film may be welded to the second inner resin film. An exposed portion where the first inner resin film is exposed from the second film portion may be provided in the folded portion. At least a part of the exposed portion may be the fixing portion.

With this configuration, it is possible to easily weld the fixing portion to the fixed portion.

In the folded portion, in a direction perpendicular to the fold line, a width of the first film portion may be greater than a width of the second film portion, and the exposed portion may be provided at an end of the first film portion.

With this configuration, it is possible to easily provide an exposed portion.

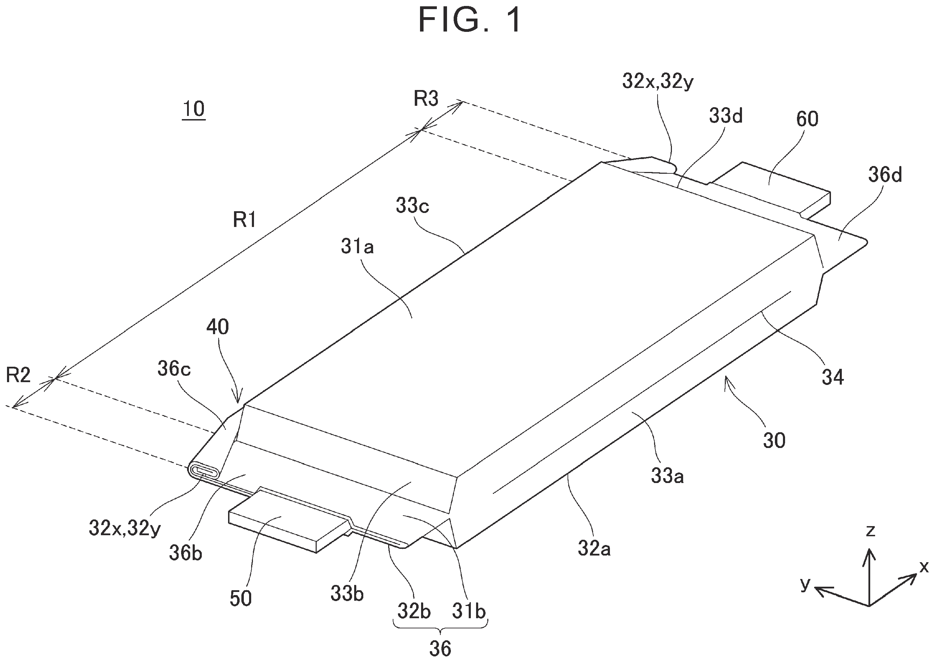

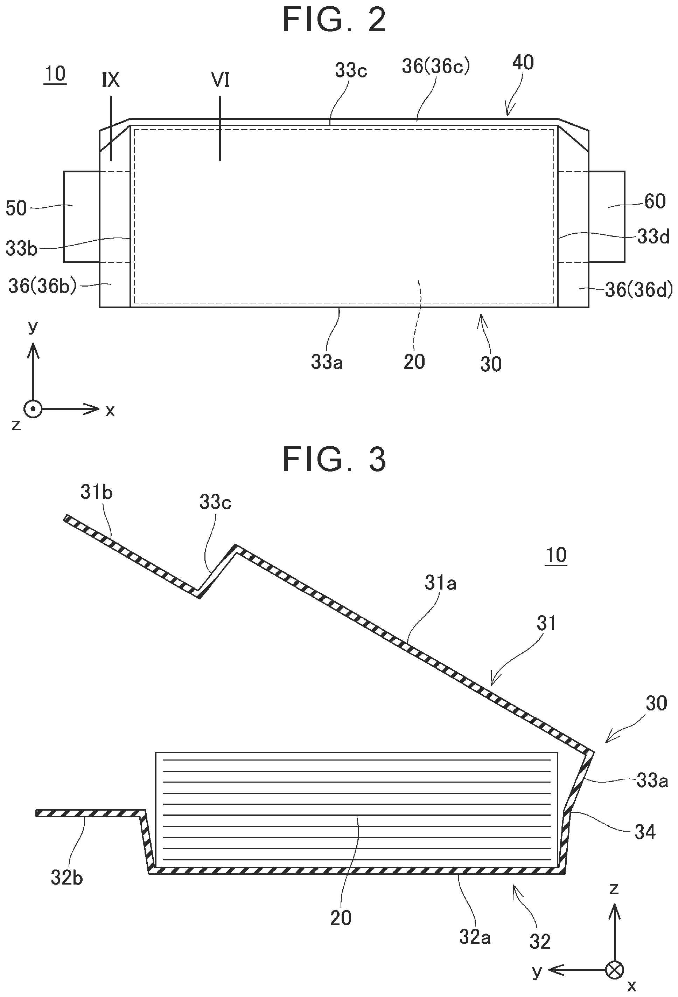

As shown in FIG. 1, a battery cell 10 of an embodiment has a rectangular flat plate shape. Hereinafter, the thickness direction of the battery cell 10 is referred to as a z direction, the longitudinal direction of the battery cell 10 is referred to as an x direction, and a direction that is orthogonal to both the z direction and the x direction is referred to as a y direction. When the battery cell 10 is used, a plurality of the battery cells 10 is stacked in the z direction to constitute a battery module. As shown in FIG. 2, the battery cell 10 includes an outer case 30 and a power storage element 20 housed inside the outer case 30. Electrode plates 50, 60 are respectively provided at both ends of the battery cell 10 in the x direction of the battery cell 10. The electrode plate 50 is a positive electrode of the battery cell 10, and the electrode plate 60 is a negative electrode of the battery cell 10.

The power storage element 20 is a chargeable and dischargeable battery element and outputs a direct-current voltage. The power storage element 20 is a stack in which a plurality of positive current collector foils and negative current collector foils are alternately stacked in the z direction with separators interposed therebetween. The electrode plate 50 is connected to one end of the power storage element 20 in the x direction. The electrode plate 60 is connected to the other end of the power storage element 20 in the x direction. The power storage element 20 is immersed in an electrolytic solution filled inside the outer case 30.

FIG. 3 is a cross-sectional view of the battery cell 10 before the outer case 30 is sealed. As shown in FIG. 3, the outer case 30 is formed of a thin film. The film forming the outer case 30 is shaped into a container form through embossing. The film has a first film portion 31 that constitutes the upper part of the outer case 30 and a second film portion 32 that constitutes the lower part of the outer case 30. The power storage element 20 is disposed between the first film portion 31 and the second film portion 32. The lower surface of the first film portion 31 and the upper surface of the second film portion 32 constitute the inner surface of the outer case 30. The upper surface of the first film portion 31 and the lower surface of the second film portion 32 constitute the outer surface of the outer case 30. A crease 34 is provided on the side surface of the outer case 30. By the first film portion 31 swinging relative to the second film portion 32 about the crease 34, the outer case 30 can be opened and closed.

The second film portion 32 has a cup portion 32a. The cup portion 32a has a cup shape with a recess on the upper surface. The power storage element 20 is disposed in the cup portion 32a. The cup portion 32a covers the lower surface of the power storage element 20 (that is, the lower surface of the power storage element 20 and the lower part of the side surface of the power storage element 20). The first film portion 31 has a cap portion 31a. The cap portion 31a has a cap shape with a recess on the lower surface. In a closed state of the outer case 30, the cap portion 31a covers the upper surface of the power storage element 20 (that is, the upper surface of the power storage element 20 and the upper part of the side surface of the power storage element 20). A box-shaped storage body that houses the power storage element 20 is constituted by the cap portion 31a and the cup portion 32a. As shown in FIG. 1 and FIG. 2, the storage body has side surfaces 33a, 33b, 33c, 33d. The side surfaces 33a, 33c are side surfaces extending along the x direction. The side surfaces 33b, 33d are side surfaces extending along the y direction. The side surfaces 33b, 33d are adjacent to the side surfaces 33a, 33c via the corners.

As shown in FIG. 3, the second film portion 32 has an outer peripheral portion 32b. The outer peripheral portion 32b is a planar portion extending along an x-y plane and provided around the cup portion 32a. The outer peripheral portion 32b is provided around the cup portion 32a, except for the side surface 33a where the crease 34 is provided. The first film portion 31 has an outer peripheral portion 31b. The outer peripheral portion 31b is a planar portion provided around the cap portion 31a. The outer peripheral portion 31b is provided around the cap portion 31a, except for the side surface 33a where the crease 34 is provided. As shown in FIG. 1, in the closed state of the outer case 30, the outer peripheral portion 31b of the first film portion 31 is stacked on top of the outer peripheral portion 32b of the second film portion 32. Hereinafter, a portion where the outer peripheral portion 31b and the outer peripheral portion 32b are stacked is referred to as an outer peripheral stacked portion 36. As shown in FIG. 1 and FIG. 2, the outer peripheral stacked portion 36 is provided over the side surfaces 33b, 33c, 33d of the storage body and protrudes outward from the side surfaces 33b, 33c, 33d. Hereinafter, a portion of the outer peripheral stacked portion 36, provided along the side surface 33c, is referred to as an outer peripheral stacked portion 36c. Portions of the outer peripheral stacked portion 36, protruding from the side surfaces 33b, 33d, are respectively referred to as outer peripheral stacked portions 36b, 36d. The outer peripheral stacked portion 36c is folded. Hereinafter, a portion where the outer peripheral stacked portion 36c is folded is referred to as a folded portion 40.

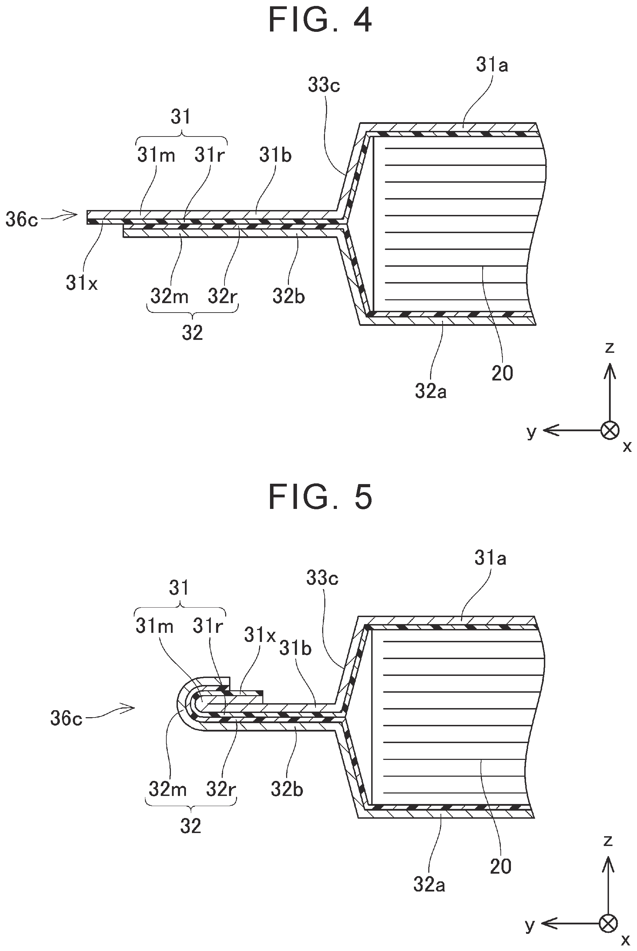

In the outer peripheral stacked portion 36, the first film portion 31 is welded to the second film portion 32. As shown in FIG. 4, the first film portion 31 includes a metal film portion 31m and an inner resin film 31r. The metal film portion 31m is made of aluminum. The inner resin film 31r covers the lower surface of the metal film portion 31m (that is, the inner surface of the outer case 30). The metal film portion 31m is exposed on the upper surface of the first film portion 31 (that is, the outer surface of the outer case 30). The second film portion 32 includes a metal film portion 32m and an inner resin film 32r. The metal film portion 32m is made of aluminum. The inner resin film 32r covers the upper surface of the metal film portion 32m (that is, the inner surface of the outer case 30). The metal film portion 32m is exposed on the lower surface of the second film portion 32 (that is, the outer surface of the outer case 30). In the outer peripheral stacked portion 36, the lower surface of the inner resin film 31r of the first film portion 31 is in contact with the upper surface of the inner resin film 32r of the second film portion 32. In the outer peripheral stacked portion 36, the inner resin film 31r is welded to the inner resin film 32r. As a result, the outer case 30 is sealed.

As shown in FIG. 1 and FIG. 2, the electrode plates 50, 60 extend from the power storage element 20 to the outer side of the outer case 30. The electrode plates 50, 60 extend from the inner side of the outer case 30 to the outer side of the outer case 30 through the interface between the outer peripheral portion 31b of the first film portion 31 and the outer peripheral portion 32b of the second film portion 32 in the outer peripheral stacked portion 36. In the region where the electrode plates 50, 60 are present, the outer peripheral portion 31b is welded to the upper surfaces of the electrode plates 50, 60, and the outer peripheral portion 32b is welded to the lower surfaces of the electrode plates 50, 60.

Next, the folded portion 40 will be described in detail. As described above, the folded portion 40 is provided in the outer peripheral stacked portion 36c. FIG. 4 shows the cross section of the outer peripheral stacked portion 36c at a stage before the folded portion 40 is formed. In the outer peripheral stacked portion 36c, the inner resin film 31r of the first film portion 31 is welded to the inner resin film 32r of the second film portion 32. As shown in FIG. 4, in the outer peripheral stacked portion 36c, the width of the outer peripheral portion 31b in the y direction is greater than the width of the outer peripheral portion 32b in the y direction. For this reason, an exposed portion 31x of the inner resin film 31r is formed on the lower surface of the outer peripheral end of the outer peripheral portion 31b.

The folded portion 40 is formed by folding the outer peripheral stacked portion 36c shown in FIG. 4. Initially, as shown in FIG. 5, the outer peripheral end of the outer peripheral stacked portion 36c is bent by 180 degrees such that the exposed portion 31x faces upward.

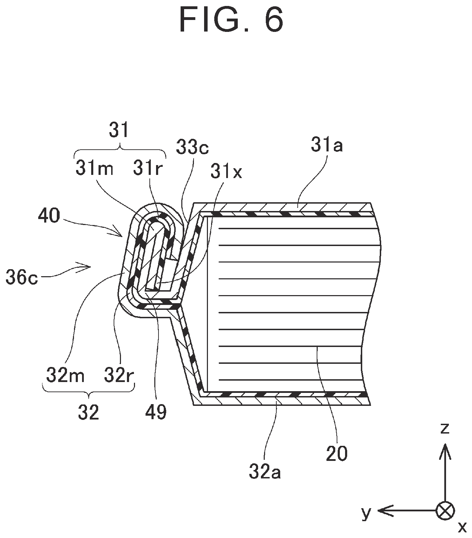

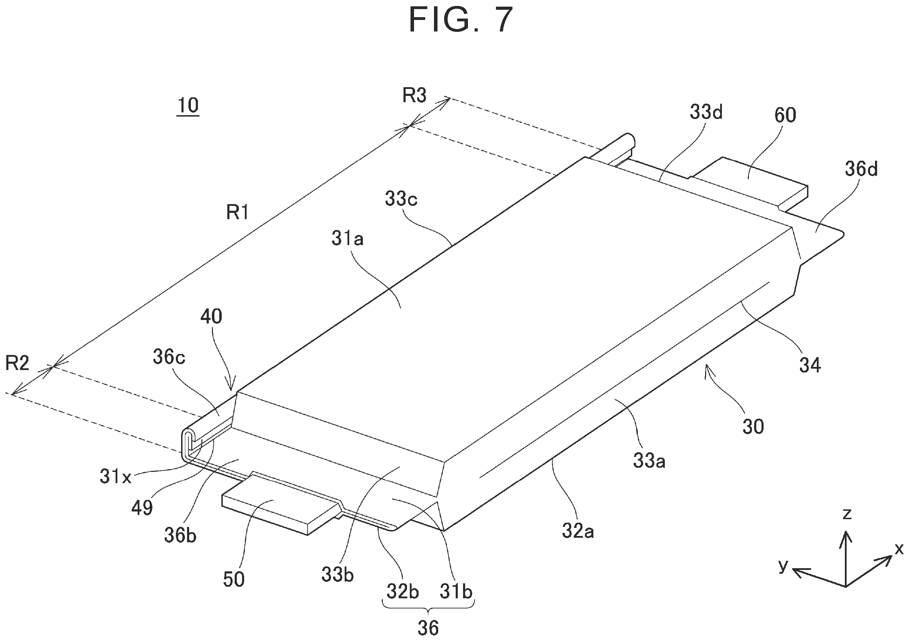

Subsequently, as shown in FIG. 6 and FIG. 7, the outer peripheral stacked portion 36c is bent upward by about 90 degrees in its proximal portion. In other words, the outer peripheral stacked portion 36c is bent toward the power storage element 20. The outer peripheral stacked portion 36c is bent at a fold line 49 extending along the x direction. As a result, the outer peripheral stacked portion 36c is compactly folded such that the outer peripheral stacked portion 36c is approximately parallel to the side surface 33c, with the result that the folded portion 40 is formed. The outer peripheral stacked portion 36c may be in contact with the side surface 33c or does not need to be in contact with the side surface 33c. Regions R1, R2, R3 in FIG. 7 show regions in the x direction. The region R1 is a region where the storage body of the outer case 30 is present, the region R2 is a region outside the side surface 33b of the storage body, and the region R3 is a region outside the side surface 33d of the storage body. In the region R1, the outer peripheral stacked portion 36c is close to the side surface 33c. In the region R2, the outer peripheral stacked portion 36c extends upward from the outer peripheral stacked portion 36b. In the region R3, the outer peripheral stacked portion 36c extends upward from the outer peripheral stacked portion 36d.

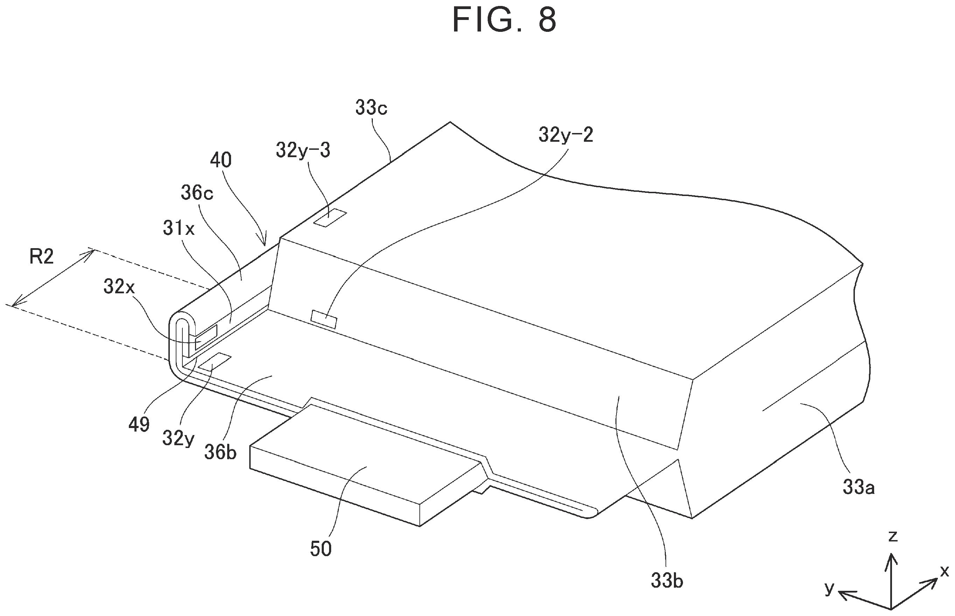

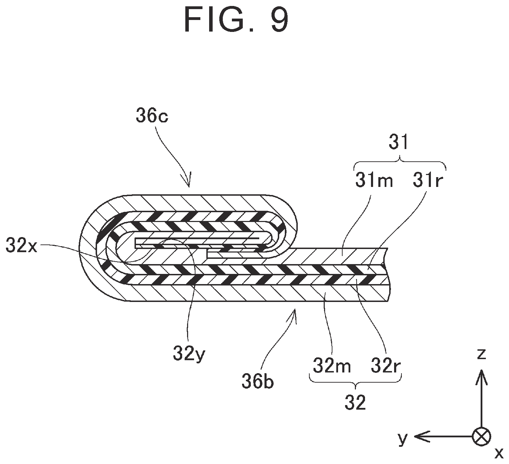

Subsequently, as shown in FIG. 1, the outer peripheral stacked portion 36c in the region R2 is welded to the outer peripheral stacked portion 36b, and the outer peripheral stacked portion 36c in the region R3 is welded to the outer peripheral stacked portion 36d. Hereinafter, a welded portion of the outer peripheral stacked portion 36c to the outer peripheral stacked portion 36b will be described. FIG. 8 is an enlarged view of the region R2 shown in FIG. 7. The exposed portion 31x (that is, the exposed portion of the inner resin film 31r) is present on the surface of the folded portion 40 on the outer peripheral stacked portion 36b side. The outer peripheral stacked portion 36c in the region R2 is further bent at the fold line 49 such that the fixing portion 32x provided within the exposed portion 31x contacts the fixed portion 32y provided on the upper surface of the outer peripheral stacked portion 36b. In other words, as shown in FIG. 9, the outer peripheral stacked portion 36c is bent such that the fixing portion 32x closely contacts the fixed portion 32y. Furthermore, the fixing portion 32x is welded to the fixed portion 32y. In this way, when the fixing portion 32x is welded to the fixed portion 32y, the outer peripheral stacked portion 36c (that is, the folded portion 40) within the region R1 is fixed in a folded shape as shown in FIG. 6. The structure of a welded portion of the outer peripheral stacked portion 36c to the outer peripheral stacked portion 36d is the same as the structure of the welded portion of the outer peripheral stacked portion 36c to the outer peripheral stacked portion 36b.

In this way, in the battery cell 10 of the embodiment, the outer peripheral stacked portion 36c is folded along the side surface 33c of the storage body. For this reason, with this structure, the battery cell 10 can be reduced in size. Therefore, by stacking the battery cells 10 to constitute a battery module, it is possible to store electric power at a high density.

In the present embodiment, the fixed portion 32y is provided in a portion of the outer peripheral stacked portion 36b, protruding from the side surface 33b of the storage body. For this reason, when the fixing portion 32x is welded to the fixed portion 32y, it is possible to suppress heat transfer to the power storage element 20.

In the first embodiment, the exposed portion 31x provided in the outer peripheral stacked portion 36c (that is, the exposed portion of the inner resin film 31r) is welded, as the fixing portion 32x, to the fixed portion 32y. Therefore, the fixing portion 32x can be appropriately welded to the fixed portion 32y (that is, the upper surface of the outer peripheral stacked portion 36b) where a resin film is not provided. When the fixed portion 32y is a metal film (for example, aluminum), polypropylene, polyethylene, polymethyl methacrylate, or the like, can be used as the resin film that constitutes the exposed portion 31x. In this case, surface treatment (for example, roughening treatment by sanding, blasting, or the like, and surface oxide removal treatment by acid treatment or the like) may be performed on the metal film. Thus, it is possible to suitably weld the resin film to the metal film.

The film that constitutes the outer case 30 may be a film that has resin films respectively provided on both sides of a metal film. In this case, the outer peripheral stacked portion 36c does not need to include the exposed portion 31x. In this case, since the surfaces of the outer peripheral stacked portions 36c, 36d are constituted by resin films, it is possible to suitably weld the fixing portion 32x of the outer peripheral stacked portion 36c to the fixed portion 32y of the outer peripheral stacked portion 36b without providing the exposed portion 31x. In this case, the resin film that constitutes the fixing portion 32x and the resin film that constitutes the fixed portion 32y are preferably made of resins with similar chemical structures (particularly, surface energy). For example, one of the fixing portion 32x and the fixed portion 32y may be made of polypropylene, and the other of the fixing portion 32x and the fixed portion 32y may be made of polyethylene.

In the above embodiment, the fixed portion 32y is provided on the upper surface of the outer peripheral stacked portion 36b. Alternatively, the fixed portion 32y may be provided at any position as long as the fixed portion 32y is provided on the surface of the outer case 30, located on the power storage element 20 side of the fold line 49. For example, like a fixed portion 32y-2 shown in FIG. 8, the fixed portion 32y may be provided on the side surface 33b. Like a fixed portion 32y-3 shown in FIG. 8, the fixed portion 32y may be provided on the upper surface of the storage body. With the configuration in which the fixing portion 32x is welded to the fixed portion 32y-2 or the fixed portion 32y-3, the folded portion 40 can be fixed.

The cap portion 31a of the embodiment is an example of a first storage portion. The cup portion 32a of the embodiment is an example of a second storage portion.

The embodiment has been described in detail above; however, the embodiment is only illustrative and is not intended to limit the appended claims. The technology described in the appended claims also encompasses various modifications and changes from the specific examples illustrated above. The technical elements described in the specification or the drawings exhibit technical usability solely or in various combinations and are not limited to combinations of the appended claims at the time of filing the application. The technology illustrated in the specification or the drawings can achieve multiple purposes at the same time and has technical usability by achieving one of those purposes.

## Claims

1. A battery cell (10) comprising:
a power storage element (20); and
an outer case (30) that houses the power storage element (20), wherein
the outer case (30) has
a first film portion (31), and
a second film portion (32);
the power storage element (20) is disposed between the first film portion (31) and the second film portion (32);
the first film portion (31) has a first storage portion (31a) covering a surface of the power storage element (20) and a first outer peripheral portion extending from the first storage portion (31a) and located around the power storage element (20);
the second film portion (32) has a second storage portion (32a) covering the surface of the power storage element (20) and a second outer peripheral portion extending from the second storage portion (32a) and located around the power storage element (20);
the first outer peripheral portion and the second outer peripheral portion are stacked and welded together to constitute an outer peripheral stacked portion (36);
the outer peripheral stacked portion (36) has a folded portion (40) folded at a fold line (49) toward the power storage element (20) and having a fixing portion (32x); and
the fixing portion (32x) is a part of the folded portion (40) and is welded to a fixed portion (32y) provided in a portion of the outer case (30), located on a side opposite to the folded portion (40) across the fold line (49).

2. The battery cell (10) according to claim 1, wherein:
the first storage portion (31a) and the second storage portion (32a) constitute a storage body;
the storage body has a first side surface (33c) and a second side surface (33b; 33d) adjacent to the first side surface (33c) via a corner;
the outer peripheral stacked portion (36) is provided over the first side surface (33c) and the second side surface (33b; 33d);
the folded portion (40) is provided along the first side surface (33c); and
the fixing portion (32x) is provided in a portion of the folded portion (40) on an outer side of the second side surface (33b; 33d).

3. The battery cell (10) according to claim 2, wherein the fixed portion (32y) is provided in a portion of the outer peripheral stacked portion (36), protruding from the second side surface (33b; 33d).

4. The battery cell (10) according to any one of claims 1 to 3, wherein:
the first film portion (31) has a first metal film portion (31m) and a first inner resin film (31r) covering an inner surface of the first metal film portion (31m);
the second film portion (32) has a second metal film portion (32m) and a second inner resin film (32r) covering an inner surface of the second metal film portion (32m);
in the outer peripheral stacked portion (36), the first inner resin film (31r) is welded to the second inner resin film (32r);
an exposed portion (31x) where the first inner resin film (31r) is exposed from the second film portion (32) is provided in the folded portion (40); and
at least a part of the exposed portion (31x) is the fixing portion (32x).

5. The battery cell (10) according to claim 4, wherein, in the folded portion (40), in a direction perpendicular to the fold line (49), a width of the first film portion (31) is greater than a width of the second film portion (32), and the exposed portion (31x) is provided at an end of the first film portion (31).
